# EUROPEAN PATENT SPECIFICATION

(11) **EP 3 275 740 B1**
(45) Date of publication and mention of the grant of the patent: **10.07.2019**
(21) Application number: 16181199.7
(22) Date of filing: 26.07.2016
(51) Int. Cl.: B60R 22/46, F16D 43/202

(54) **CLUTCH FOR A SEAT BELT TENSIONER AND METHOD FOR TRANSFERRING A CLUTCH FROM AN ENGAGED POSITION INTO A DECOUPLED POSITION**
KUPPLUNG FÜR EINEN SITZGURTSTRAFFER UND VERFAHREN ZUR ÜBERTRAGUNG EINER KUPPLUNG AUS EINER EINGERASTETEN POSITION IN EINE AUSGERASTETE POSITION
EMBRAYAGE POUR UN TENDEUR DE CEINTURE DE SÉCURITÉ ET PROCÉDÉ POUR TRANSFÉRER UN EMBRAYAGE D'UNE POSITION ACCOUPLÉE VERS UNE POSITION DE DÉSACCOUPLEMENT

(43) Date of publication of application: 31.01.2018
(73) Proprietor: TRW Automotive GmbH, 73553 Alfdorf (DE)
(72) Inventor: Holbein, Wolfgang, 73553 Alfdorf (DE); Singh, Yashwanth, 73553 Alfdorf (DE)
(74) Representative: ZF TRW Patentabteilung

(56) References cited:
- EP-A2- 0 989 035
- DE-A1-102011 119 343

## Description

The invention relates to a clutch for a seatbelt tensioner of a seatbelt system in a vehicle and to a method for transferring the clutch from an engaged position into a decoupled position.

Reversible seatbelt tensioners are used to increase the safety of the vehicle occupants and their driving comfort. A reversible drive, usually an electric motor, is coupled with a seatbelt spool axis to rotate the seatbelt spool of a seatbelt retractor, and to take in loose seatbelt webbing, for instance in situations in which a control unit decides that this could be potentially beneficial. Then, a clutch is closed that couples the reversible drive with the seatbelt spool, and the seatbelt spool is rotated by the reversible drive to draw in seatbelt webbing. In the regular operating mode of the seatbelt system the clutch is open so that the seatbelt spool of the seatbelt retractor can draw in and give out the seatbelt webbing without being hindered by the reversible drive. An example for a clutch for a seatbelt tensioner is shown in DE 10 2011 119 343 A1. This document discloses a clutch for a seat-belt tensioner in a vehicle, comprising a driving element adapted for being rotated in a driving direction and in a releasing direction and a driven element connectable with a seat-belt spool, the driving element and the driven element having a common rotation axis,a pawl being pivotally held at a pivot pin arranged on the driving element and forming a pivot axis, the pawl being adapted to assume a neutral position in which the pawl is not in engagement with the driven element and from which it can be pivoted radially inwards by turning the driving element in driving direction, an engaged position in which the pawl engages the driven element and couples the driving element with the driven element, and a decoupled position in which the pawl is not in engagement with the driven element and cannot be engaged with the driven element by turning the driving element in driving direction.

Additionally to the reversible drive, the seatbelt tensioner usually is provided with a single-use pyrotechnic drive that will only be activated in case of an actual crash situation. The seatbelt spool is rotated by the pyrotechnic drive with a far higher rotational velocity than by the reversible drive. So as not to interfere with the pyrotechnic drive and also to prevent an interference with a subsequent load limiting function of the seatbelt system that reduces the force acting on the occupant after the pyrotechnic drive has finished its operation, the clutch should be decoupled from the seatbelt spool when the pyrotechnic drive is activated. The decoupling from the seatbelt spool should occur in a determined and controlled manner and should transfer the clutch reliably into a decoupled position in which no unintentional reengagement can occur.

The seatbelt spool, the clutch and also the pyrotechnic drive usually are mounted on a frame of the seatbelt retractor. Commonly, the pyrotechnic drive is mounted on the side of the seatbelt spool which is opposite the side at which the clutch is mounted. On activation of the pyrotechnic drive, a sudden impulse is generated, for instance caused by use of a so-called snake, a flexible, deformable body that is accelerated by a pyrotechnic charge. When the pyrotechnic charge is ignited, the snake is abruptly displaced by the developing gas pressure and interacts with a drive pinion connected to the seatbelt spool axis to rotate the seat belt spool. Due to the abrupt movement of the snake's mass and its impact on the drive pinion, an impulse is generated that acts perpendicularly to the seatbelt spool axis at one end of the seatbelt spool. This impulse is high enough that a slight elastic deformation of the seatbelt frame occurs, and the seatbelt spool axis is slightly displaced. After its first displacement. the seatbelt spool will rebound and eventually settle back in its regular, and the seat belt spool will be rotated by the pyrotechnic drive. However, the initial impulse imparted by the snake causes the seatbelt spool also to move relative to the clutch, in particular relative to the pawl of the clutch that interacts with the seatbelt spool in the engaged position.

It is an object of the present invention to provide a clutch that will be reliably kept in its engaged position during the activation of the pyrotechnic drive.

This is achieved with a clutch for a seatbelt tensioner in a vehicle that has a driving element adapted for being rotated in a driving direction and in a releasing direction and a driven element connectable with the seatbelt spool, the driving element and the driven element having a common rotation axis. Further, a pawl is provided that is pivotally held at a pivot pin arranged on the driving element and forming a pivot axis. The pawl has a bearing lug with a non-circular inner circumference, the bearing lug being positioned around the pivot pin so that the pawl can be shifted for a limited distance with respect to the pivot pin. The pawl is adapted to assume a neutral position in which the pawl is not in engagement with the driven element and from which it can be pivoted radially inwards by turning the driving element in driving direction, an engaged position in which the pawl engages the driven element and couples the driving element with the driven element, and a decoupled position in which the pawl is not in engagement with the driven element and cannot be engaged with the driven element by turning the driving element in driving direction.

The driving element is coupled with the reversible drive of the seatbelt tensioner when the clutch is mounted on a seatbelt retractor. When the pawl is in its neutral position, the clutch is in its open, disengaged state, and the driving element is not coupled with the driven element. When the pawl is in its engaged position and engaged with the driven element, the clutch is in its closed, engaged state. In the following, the terms "neutral position" and "engaged position" will be used to describe the pawl positions as well as the states of the clutch. Bringing the pawl from the neutral position into the engaged position and back into the neutral position is also referred to as the regular operation of the clutch or the seatbelt tensioner. In these operations, the reversible drive is used exclusively so that both operations can be repeated without limitation.

The decoupled position differs from the neutral position in that the pawl is blocked from reengagement by a suitable blocking mechanism. For instance, the pawl can be locked on another component of the clutch. It might be possible to reversible release the pawl from the decoupled position and to move it back into the neutral position. However, it is also possible to design the clutch so that the pawl cannot be moved back into the neutral position once it has reached the decoupled position.

The pawl only reaches the decoupled position when the pyrotechnic drive is activated. To transfer the pawl into the decoupled position, the high rotational energy transferred to the seatbelt spool by the pyrotechnic drive may be utilized. The kinetic energy transferred to the pawl is for instance high enough to move the pawl further radially outwards than in its neutral position and to deform a latching arm far enough to close a latching connection and/or clamp the pawl against an elastic element.

According to the invention, the impulses that displace the seatbelt spool axis and, correspondingly, the driven element due to the activation of the pyrotechnic drive can be absorbed by the pawl by shifting relative to the pivot pin without the pawl being rotated radially outwards. Therefore, the pawl is securely kept in engagement with the driven element even when the driven element is temporarily displaced by the activation of the pyrotechnic drive. As a consequence, the start of the rotation of the driven element due to the rotation imparted by the pyrotechnic drive on the seatbelt spool can reliably pivot the pawl radially outwards into its decoupled position.

As the pyrotechnic drive is fixedly mounted on the seatbelt retractor, the direction of the impulse delivered by the snake is defined. However, the pawl is mounted on the driving element and the driving element turns around the rotation axis of the clutch so that the pawl can be situated at any angular position with regard to the direction of the impulse caused by the activation of the pyrotechnic drive.

It has been observed that the seatbelt spool axis may initially be displaced in the direction of the force that the accelerated snake transfers to the drive pinion. However, as the movement is elastic, the seatbelt spool will rebound and then will be displaced in the opposite direction before it returns to its regular position. Therefore, two force peaks result from the activation of the pyrotechnic drive that are directed oppositely.

Depending on the angular position of the pawl, one or both of these force peaks may be non-critical, as they do not act on the pawl or act in a direction where the engaged position is enhanced, for instance by moving teeth of the driven element further into engagement with the teeth of the pawl. In this regard, it has been found to be advantageous to arrange the bearing lug of the pawl so that the pawl can be shifted with regard to the pivot pin in a radially outward direction.

To provide the necessary space for a displacement of the pawl, in the engaged position the inner circumference of the bearing lug preferably is distanced from the pivot pin approximately along the radial direction in direction towards the rotation axis of the clutch. When the driven element is laterally displaced in the direction of the pawl, the pawl will be shifted with regard to the pivot pin, but not rotated radially outwards.

Generally, the term "radially outwards" in this application is not only used in the true mathematical sense, but also to indicate a general motion of a component away from the rotation axis of the clutch.

Preferably, the inner circumference of the bearing lug has an oval shape, as this makes it possible for the pawl to shift relative to the pivot pin but also to keep in contact with the pivot pin during regular engagement and disengagement operations.

The small axis of the oval may correspond to the diameter of the pivot pin. In the engaged position of the pawl, the long axis of the oval may be extending approximately in radial direction so that the pawl is able to shift radially outwards should an activation of the pyrotechnic drive occur while the pawl is a critical angular position with regard to the forces introduced by the activation of the pyrotechnic drive. The pivot pin preferably has a circular outer circumference so that the pawl can pivot unimpededly around the pivot pin.

As the pawl will shift with regard to the pivot pin only when the pyrotechnic drive is activated, preferably a pawl positioning element is provided that keeps the pivot pin in a predetermined region of the bearing lug during regular engagement and disengagement processes. For instance, a portion of the inner circumference of the bearing lug is adapted to the outer circumference of the pivot pin and may be formed as a segment of a circle with the same diameter as the pivot pin so that the pawl can rotate around the pivot pin without play during regular operation.

The clutch may have a clutch disk ring with a guiding geometry that interacts with a guiding geometry provided on the pawl to guide the pawl into its different positions and that is rotatable to a certain extent relative to the driving element.

In one preferred embodiment, the pawl positioning element is provided on the clutch disk ring, in particular it may be a protrusion arranged at an inner circumference of the clutch disk ring.

When the pawl positioning element is arranged on the clutch disk ring, it is preferably a rigid structure. In case of activation of the pyrotechnic drive, the kinetic energy transmitted to the pawl by the driven element should be high enough to move the pawl relative to the outer contour of the pawl positioning element so that the pawl can be displaced relative to the pivot pin.

According to a second preferred embodiment, the pawl positioning element is arranged on the driving element. For instance, the pawl positioning element is a spring element. In particular, the spring element may act on the pawl essentially in a direction towards the rotation axis.

When the pawl positioning element is an elastic element like a spring element, the kinetic energy transferred to the pawl should be high enough to deform the pawl positioning element to allow the displacement of the pawl relative to the pivot pin.

In general, the kinetic energy transferred by the initial impulses on activation of the pyrotechnic drive to the seatbelt spool axis preferably is high enough to overcome a holding force of the pawl positioning element and to allow the pawl to be displaced with regard to the pivot pin.

The pawl positioning element preferably is arranged in the vicinity of the pivot pin so that a part of the pawl that forms the bearing lug lies between the pawl positioning element and the pivot pin.

The pawl positioning element may be located so that it keeps a radially outer portion of the bearing lug in contact with the pivot pin during regular engagement and disengagement operations.

It is possible that the pawl is shifted back into its regular position once the initial impulses acting on the seatbelt spool have terminated and the pyrotechnic drive starts to rotate the seatbelt spool. The transfer of the pawl from the engaged position into the decoupled position, however, is not dependent on the position of the pivot pin inside the bearing lug. The pawl will be in either case pivoted outwards due to the interaction of the driven element with the pawl and will reliably reach its decoupled position.

In a commonly known design, the pawl has at least one tooth that is engaged with a toothing of the driven element in the engaged position to transfer a rotational movement from the reversible drive to the driven element.

Preferably, the pawl also has a contact portion that is arranged distanced from the teeth of the pawl and that is in contact with one of the teeth of the driven element in the engaged position. However, the contact portion should not be truly engaged with the driven element or hooked behind one of the teeth of the driven element. The main purpose of the contact portion is e.g. to keep the alignment of the seat belt spool during torque transmission.

The contact portion may be located between the bearing lug and the center of mass of the pawl.

Usually, the pawl has a curved shape that follows the outer circumference of the driven element. The center of mass of the pawl, therefore, lies outside the body of the pawl. In this case, when a force is introduced into the pawl at the contact portion, the pawl will also be rotated around its center of mass radially inwards and will come into deeper engagement with the driven element.

The object of the invention is also achieved by a method for transferring a clutch as described above from the engaged position into the decoupled position. The following steps are carried out in this method: A pyrotechnic drive coupled with the driven element is activated, an impulse acting in a radially outward direction is introduced into the pawl by the driven element, the bearing lug of the pawl is shifted in radially outward direction while the pawl stays in engagement with the driven element, and the pawl is pivoted outwards into the decoupled position when the driven element is rotated in driving direction by the pyrotechnic drive.

During the initial displacement of the seatbelt spool axis, the pawl stays reliably in engagement with the driven element, as the forces being imparted by the driven element to the pawl only lead to a displacement of the pawl relative to the pivot pin by the bearing lug of the pawl shifting with regard to the pivot pin, and the pawl is not pivoted radially outwards. Only when the pyrotechnic drive starts to truly rotate the seatbelt spool and, therefore, also the driven element coupled to the seatbelt spool, is the pawl pivoted radially outwards by the kinetic energy transferred from the rotating driven element to the pawl, and the pawl is moved all the way into its decoupled position.

Preferably, during the step of the pawl shifting radially outwards relative to the pivot pin, the pawl also rotates about its center of mass so that the teeth in the region of a free end of the pawl are moved further radially inwards into a toothing of the driven element and so come into a deeper engagement with the driven element.

Preferred embodiments of the invention are described in detail in the following with reference to the attached drawings, in which:
- Figure 1 shows a schematic side view of a clutch for a seatbelt tensioner according to a first embodiment of the invention in an engaged position of the clutch but before an activation of a pyrotechnic drive;
- Figure 2 shows an enlarged portion of Figure 1;
- Figure 3 shows a schematic side view of a clutch according to a second embodiment of the invention in the engaged position but before an activation of the pyrotechnic drive;
- Figure 4 shows the clutch of Figure 1 after an initial phase of the activation of the pyrotechnic drive;
- Figure 5 shows the clutch of Figure 1 at the moment where the pawl starts its movement into the decoupled position due to the rotation of the driven element by the pyrotechnic drive; and
- Figures 6 and 7 show the clutch of Figure 1 in the decoupled position.

The figures show clutches 10, 10' for a seatbelt tensioner in a vehicle in two embodiments. Only the clutch is displayed in the figures. However, as is generally known, the seatbelt tensioner is connected to a seatbelt retractor having a frame in which a seatbelt spool is rotatably arranged that can take up and give out a seatbelt webbing. Usually, the clutch is arranged at one side of the seatbelt spool, while a pyrotechnic drive of the seatbelt tensioner, comprising a mass accelerated by a pyrotechnic charge on activation that interacts with a drive pinion connected to the seatbelt spool, is positioned at the opposite side of the seatbelt spool. The accelerated mass is for instance a so-called snake which is a cylindrical body of a deformable plastic material that is brought into contact with the drive pinion to set the seatbelt spool into a fast rotation.

The clutch 10, 10' is connected to a reversible drive 12 of the seatbelt tensioner, usually an electric motor, to turn the seatbelt spool in a driving direction D to take up seatbelt webbing under certain conditions. The reversible drive 12 can be operated repeatedly while the pyrotechnic drive is a single-use device.

The general design and operation of the clutch will be discussed in the following with regard to the first embodiment. Unless explicitly indicated, the second embodiment has the same general design and the same general mode of operation.

The clutch 10 has a driving element 14 that can be connected with the reversible drive 12 by a driving gear 16 that is part of the driving element 14.

Further, the clutch 10 has a driven element 18 arranged coaxially with the driving element 14 and connected with regard to rotation to the seatbelt spool. The seatbelt spool and the driven element 18 always rotate in the same direction and with the same velocity.

The driving element 14 and the driven element 18 have a common rotation axis A, the driven element 18 extending through a center opening 20 of the driving element 14. Generally, when a radial direction r and a circumferential direction U are discussed in this application, these directions are always related to the common rotation axis A.

The reversible drive 12 can rotate the driving element 14 in the driving direction D and in the opposite releasing direction R to transfer the clutch 10 into different operating positions. The driving direction D is indicated counterclockwise in the figures while the releasing direction R is indicated clockwise in the figures.

The clutch 10 serves to couple the reversible drive 12 to the seatbelt spool so that the driving element 14 can turn the seatbelt spool in the driving direction D to wind up seatbelt webbing to tighten the seatbelt around a vehicle occupant. This kind of seatbelt tensioning, also called pretensioning, takes place for instance when an electronic control unit detects an imminent dangerous situation in which the seatbelt should be tensioned as a measure of precaution. If the critical situation passes, the clutch 10 will be disengaged again so that the seatbelt spool again can turn unhindered in both directions.

When the clutch 10 is closed, the reversible drive 12 is connected to the seatbelt spool. When the clutch 10 is opened, the reversible drive 12 is decoupled from the seatbelt spool.

The pyrotechnic drive arranged on the opposite side of the seatbelt spool from the clutch 10. It is only activated in case of an actual crash and will rotate the seatbelt spool in driving direction D to take up seatbelt webbing. This rotation caused by the pyrotechnic drive is a lot faster than the rotation caused by the reversible drive 12.

The rotational motion is transmitted from the driving element 14 to the driven element 18 by a pawl 22 that is pivotally held on the driving element 14 at a pivot pin 24 that may be formed integrally with the driving element 14. The pivot pin 24 defines a pivot axis for the pawl 22. The pivot pin 24 extends in parallel with rotation axis A (und thus perpendicular to the plane defined by the driving element 14).

The pawl 22 has a generally curved shape that approximately follows the curvature of the driven element 18. At its free end 26, the pawl 22 has several teeth 28 (in this example three teeth 28) that can come into engagement with teeth 30 of a toothing at the outer circumference of the driven element 18.

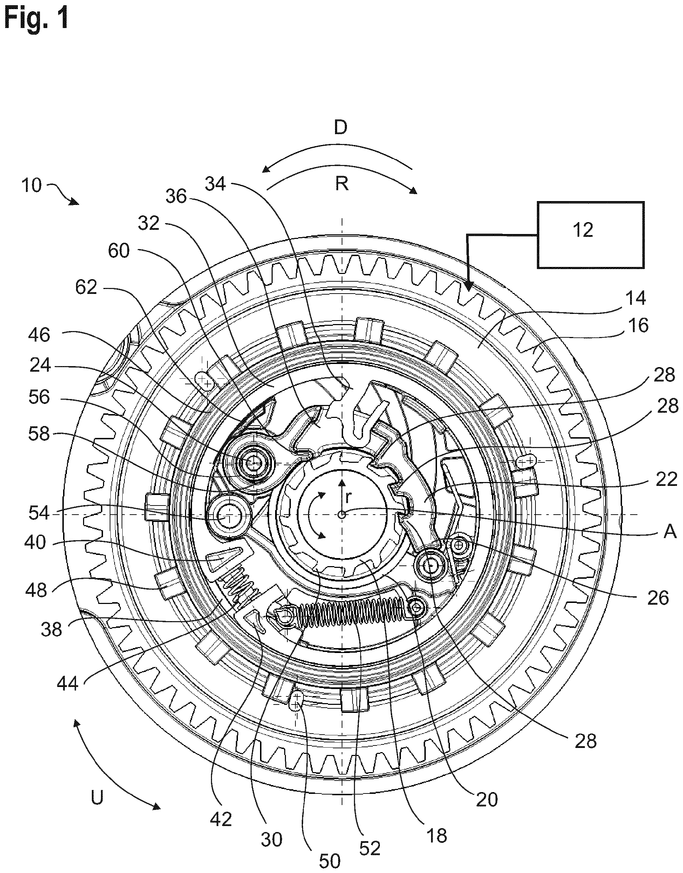

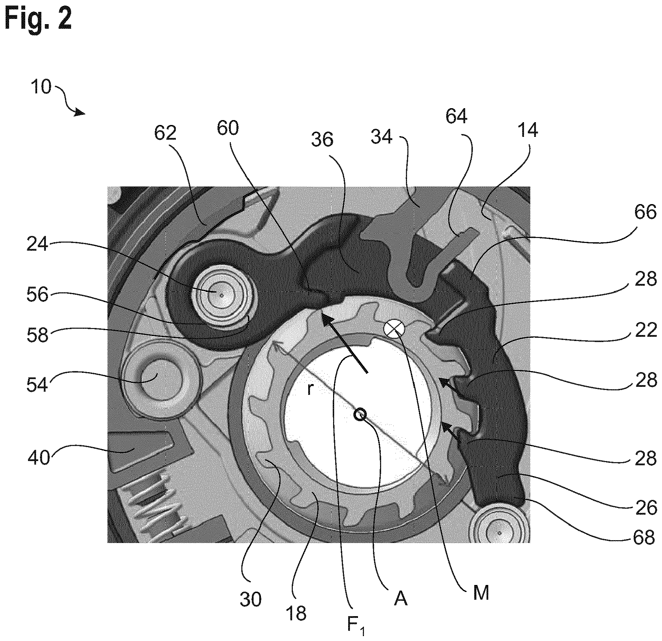

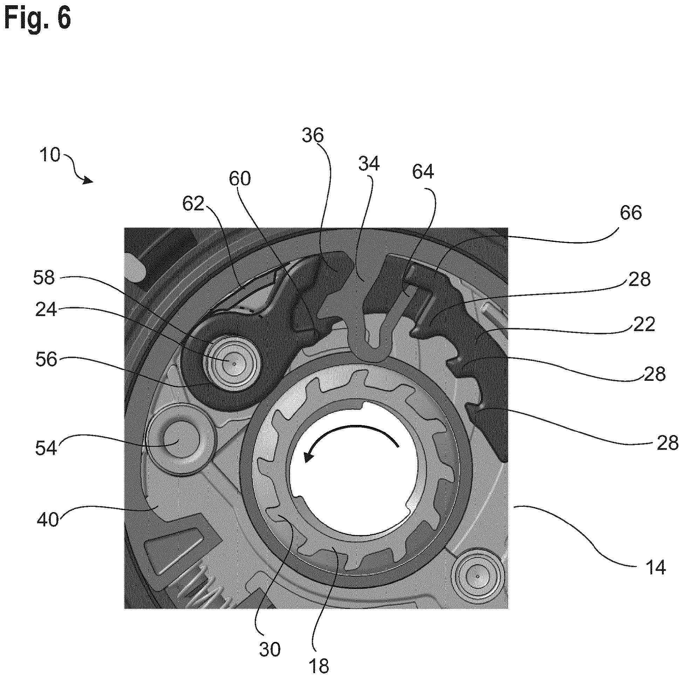

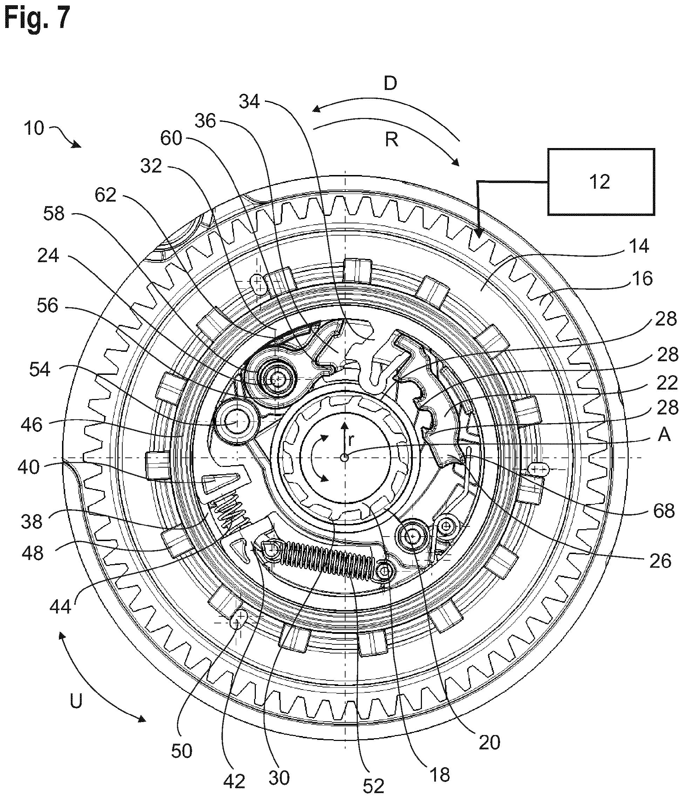

The pawl 22 can be pivoted around the pivot pin 24 into several positions: a neutral position in which the pawl 22 is not in engagement with the driven element 18 (not shown), an engaged position, shown in Figures 1 and 2, where the pawl 22 is in engagement with the driven element 18, and a decoupled position, shown in Figures 6 and 7, where the pawl 22 is located radially further outwards than in the neutral position and is locked against a regular (re)-engagement.

Engagement and disengagement of the pawl by rotation of the reversible drive 12 in driving direction D and releasing direction R are denoted in this application as the regular operations of the clutch. The pawl 22 will reach the decoupled position only when the pyrotechnic drive is activated, as will be described later.

The pawl 22 is moved from the neutral position into the engaged position by interaction with a clutch disk ring 32. The clutch disk ring 32 also is centered around the common rotation axis A and is arranged in a plane above the driving element 14 so that it surrounds the pawl 22.

The clutch disk ring 32 comprises a clutch disk arm 34 extending radially inwards from an inner circumference of the clutch disk ring 32 that is arranged in a recess 36 in the body of the pawl 22.

On the clutch disk arm 34 and on edges of the recess 36 facing the clutch disk arm 34, interacting guiding geometries are provided that serve to guide the pawl 22 radially inwards into engagement with the driven element 18 during the engagement process and radially outwards again out of engagement with the driven element 18 back in the neutral position when the driving element 14 is rotated in releasing direction R.

The clutch disk ring 32 is discontinuous in circumferential direction U. The gap 38 between its two circumferential ends 40, 42 is bridged by an expansion spring 44 that presses the circumferential ends 40, 42 apart in circumferential direction U.

The clutch disk ring 32 is surrounded by a retainer ring 46 to which the clutch disk ring 32 is coupled by friction. The retainer ring 46 has a plurality of radially extending spokes 48 that are arranged at regular distances along the outer periphery of the retainer ring 46. A retaining structure 50, here in form of several retaining pins distributed along the circumference of the retainer ring 46, limits the rotation of the retainer ring 46 to the distance between two adjacent spokes 48.

The driving element 14 can rotate relative to the clutch disk ring 32 as long as the clutch disk ring 32 is retained by friction on the retainer ring 46. At higher rotational forces, however, the frictional forces will be overcome, and the clutch disk ring 32 rotates together with the driving element 14.

To transfer the clutch 10 into its closed state or engaged position, the pawl 22 has to be brought into engagement with the driven element 18.

For this purpose, the reversible drive 12 is activated and the driving element 14 starts to rotate in driving direction D. In the neutral position of the pawl, the spokes 48 of the retainer ring 46 are distanced in driving direction D from the nearest stopping pin. The clutch disk ring 32 is coupled by a weak spring connection 52 with the driving element 14. Therefore, initially the clutch disk ring 32 is entrained by the rotating driving element 14 and, due to the frictional force between the clutch disk ring 32 and the retainer ring 46, the retainer ring 46 is entrained by the clutch disk ring 32 until the spokes 48 come into contact with the stopping pins of the retaining structure 50. Then, the retainer ring 46 stops rotating and, due to the frictional force between the retainer ring 46 and the clutch disk ring 32, the clutch disk ring 32 is also stopped from rotating. This results in the driving element 14 rotating relative to the clutch disk arm 34, and the left-hand face of the recess 36 in the pawl 22 is pushed against the right-hand side (in the figures) of the clutch disk arm 34 and is pivoted radially inwards into engagement with the driven element 18. The teeth 28 of the pawl 22 mesh with the teeth 30 of the driven element 18 so that the driven element 18 is entrained in driving direction D by the pawl 22. This situation is shown in Figure 1.

The relative motion between the driving element 14 and the clutch disk ring 32 continues until a clutch disk stop 54 on the driving element 14 comes into contact with the first circumferential end 40 of the clutch disk ring 32, which is formed here as a projection extending inwards towards the rotation axis A. From this moment on, the driving element 14 pushes the clutch disk ring 32 in driving direction D, and the clutch disk ring 32 rotates together with the driving element 14 and slides inside the retainer ring 46.

When the pyrotechnic drive is not activated, the clutch 10 will be disengaged again and transferred back into the neutral position by rotating the reversible drive 12 in the releasing direction R.

The pawl 22 rotates together with the driving element 14 relative to the clutch disk ring 32 which is again held by friction on the retainer ring 46. The right-hand face of the recess 36 (in the figures) comes into contact with the left-hand side of the clutch disk arm 34, and the pawl 22 is pivoted radially outwards back into its neutral position.

To reengage the clutch 10, the reversible drive 12 turns the driving element 14 in driving direction D and the pawl 22 will be once again pivoted inwards into engagement with the driven element 18.

However, should the pyrotechnic drive be activated when the pawl 22 is in its engaged position, the clutch 10 will be decoupled so as not to impede the pyrotechnic drive and a subsequent load limiting function of the seatbelt system.

In a simplified scenario, the seatbelt spool conducts several different motions in the initial phase of the activation of the pyrotechnic drive.

When the snake initially contacts the drive pinion, due to the off-axis contact point and the high impulse of the accelerated mass of the snake, the seatbelt spool does not start to rotate immediately, but first is displaced slightly. Also, the frame of the seatbelt retractor is slightly elastically deformed, absorbing the impulse of the moving snake. Then, the seatbelt spool rebounds, and the seatbelt spool axis reverses its lateral displacement direction and is displaced in the opposite direction before returning to its regular centered position. These displacement motions take place shortly before the drive pinion and the seatbelt spool start rotating with a high velocity.

During these lateral displacements of the seatbelt spool the clutch 10 should remain closed and the pawl 22 should remain in engagement with the teeth 30 of the driven element 18. Only when the seatbelt spool and, therefore, the driven element 18 start rotating, the high kinetic energy will be used to transfer the pawl 22 into its decoupled position.

To keep the pawl 22 in engagement with the driven element 18 in the initial phase of the activation of the pyrotechnic drive, the bearing lug 56 through which the pivot pin 24 extends is slightly bigger than the outer circumference of the pivot pin 24, so that the pawl 22 can shift for a certain distance relative to the pivot pin 24 without pivoting radially outwards. Therefore, the pawl 22 can receive a force transmitted by the driven element 18 and be displaced by this force relative to the pivot pin 24 without necessarily translating this force into a pivotal motion radially outwards.

Due to the general design of the clutch 10, the pawl 22 can be in any angular position with regard to the rotation axis A when the pyrotechnic drive is activated. In most positions, the displacement motions of the seatbelt spool due to the impact of the snake and the rebound of the seatbelt spool are not critical as no forces act on the pawl 22 that might lead to an unintentional disengagement of the pawl 22 from the driven element 18. However, when the force F₁ resulting either from the first or the second displacement motion acts approximately in the direction towards the pivot pin 24 (ca. +/- 30° with regard to the radial direction r, or, correspondingly, along an imaginary line between the pivot axis and the rotation axis A, see e.g. Figure 2), the pawl 22 receives the force F₁ and is shifted outwards, with the bearing lug 56 sliding with regard to the pivot pin 24. The inner circumference of the bearing lug 56 has a non-circular shape, in this example an oval shape, and in the regular operation of the clutch 10 the bearing lug 56 is positioned on the pivot pin 24 so that the inner circumference of the bearing lug 56 is distanced along the radial direction r from the pivot pin 24 and a space 58 is provided radially inwards of the pivot pin 24. The pivot pin 24 lies against the radially outer part of the inner contour of the bearing lug 56. The long axis of the oval is oriented approximately in radial direction r in the engaged position. Therefore, when a force acts on the pawl 22 in direction towards the bearing pin 24, the pawl 22 can shift laterally relative to the pivot pin 24 for the limited distance provided by the space 58.

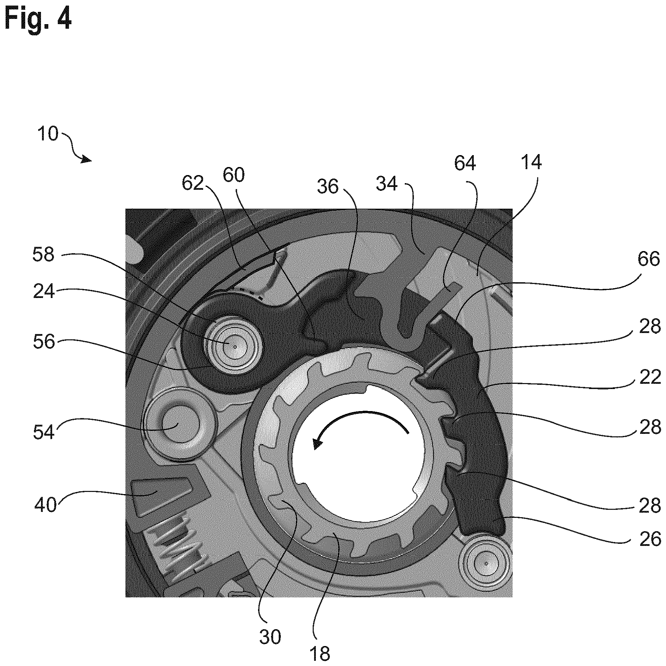

To facilitate the transfer of the force F₁ into a shifting of the pawl 22 approximately radially outwards with regard to the pivot pin 24, a contact portion 60 is formed on the pawl 22, in this case on the left-hand face limiting the recess 36. The geometry of the pawl 22 and the arrangement of its teeth 28 ensure that the contact portion 60 will be in contact with one of the teeth 30 in the engaged position, as shown in Figure 2. However, the tooth 30 does not engage the tooth 30 or hook behind this tooth 30. In other words, a component of the force F₁ will act on the contact portion 60 when the pawl 22 is positioned so that the pivot pin 24 lies in a position of about 9 to 12 o'clock with regard to Figure 2. In this case, the pawl 22 will be translated relative to the pivot pin 24 into the position shown in Figure 4, where the space 58 radially inwards of the pivot pin 24 is closed.

The small axis of the oval shape of the bearing lug 56 approximately corresponds to the diameter of the pivot pin 24 which has a circular outer circumference. During the regular operations, the pivot pin 24 lies against the radial outer portion of the bearing lug 56, and the inner circumference of the bearing lug 56 is in contact with the outer circumference of the pivot pin 24 for about half of the circumference of the pivot pin 24. Therefore, the pawl 22 can pivot around the pivot pin 24 without being shifted during regular engagement and disengagement operations. A shift of the pawl 22 occurs only when the pyrotechnic drive is activated and the driven element 18 pushes against the pawl 22 roughly in the direction towards the pivot pin 24.

The contact portion 60 is situated between the bearing lug 56 and a center of mass M of the pawl 22 (see Figure 2). The center of mass M, due to the generally curved shape of the pawl 22, lies outside of the body of the pawl 22. Therefore, at the same time that the pawl 22 is shifted radially outwards by the force F₁ acting on the contact portion 60, the free end 26 of the pawl 22 is rotated about the center of mass M radially inwards into deeper engagement with the teeth 30 of the driven element 18 as indicated by the arrows in Figure 2.

Optionally, a pawl positioning element 62 is provided that helps keeping the bearing lug 56 in the position shown in Figure 2 so that the space 58 stays open radially inwards of the pivot pin 24.

In the first embodiment, the pawl positioning element 62 is a slight protrusion formed at the inner circumference of the clutch disk ring 32 that is slightly offset in releasing direction R with regard to the radial direction r and lightly contacts the pawl 22 to keep it from shifting radially outwards. When the pawl is pushed by the force F when the pyrotechnic drive is activated, it slides to the left in Figure 2 and moves away from the protrusion.

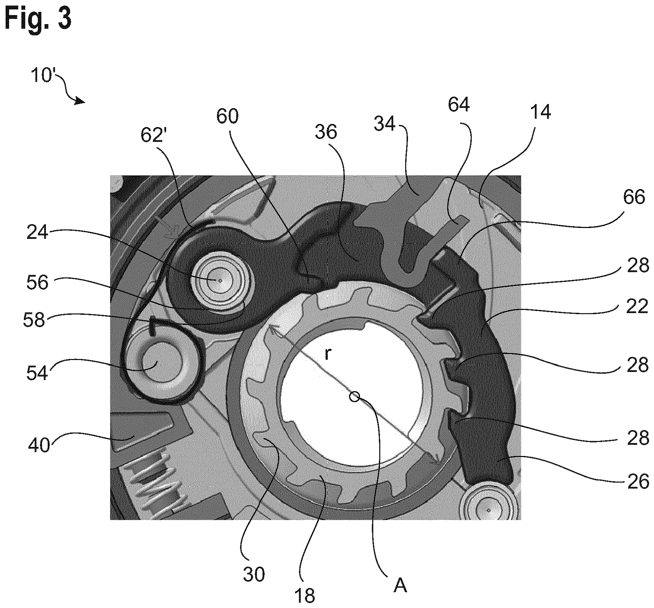

In the second embodiment of the clutch 10' shown in Figure 3, the pawl positioning element 62' is arranged on the driving element 14 instead. In this example, the pawl positioning element 62' is a spring element. One end of the spring element is fixedly attached at the clutch disk stop 54 while its free end extends alongside the inner circumference of the clutch disk ring 32 and lightly presses against the pawl 22 in radial direction r to keep the bearing lug 56 in its intended position unless the driven element 18 imparts a force on the pawl 22. The kind and position of the pawl positioning element are the only distinctions between the first and the second embodiment.

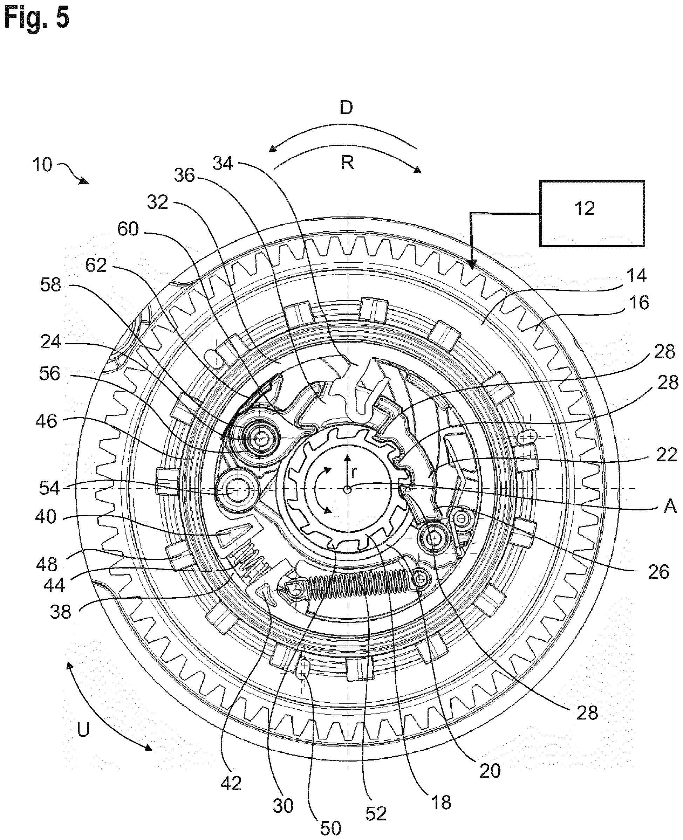

After the initial phase of the activation of the pyrotechnic drive the pawl 22 may be shifted with regard to the pivot pin 24, but is still in engagement with the driven element 18. Now the driven element 18 starts rotating in driving direction D and the left-hand flanks of one or several of its teeth 30 come into contact with one or several teeth 28 of the pawl 22 as shown in Figure 5. A tangential force F₂ is imparted on the pawl 22, leading to the pawl 22 being pivoted radially outwards around the pivot pin 24.

The kinetic energy transferred from the driven element 18 to the pawl 22 is so high that the clutch disk arm 34 is slightly deformed and a free arm 64 of the generally U-shaped clutch disk arm 34 snaps behind a protrusion 66 on the left-hand face of the recess 36, thereby locking the pawl 22 in the decoupled position as shown in Figure 6 and Figure 7.

However, the blocking of the pawl 22 in the decoupled position can be achieved in many different ways and is completely independent from the described mechanism that keeps the pawl 22 in engagement during the displacement of the seatbelt spool in the initial phase of the activation of the pyrotechnic drive. Due to this mechanism, it is ensured that the pawl 22 will only be moved radially outwards when the driven element 18 and the seatbelt spool truly are rotated by the pyrotechnic drive and not already by the lateral displacement of the seatbelt spool.

## Claims

1. A clutch (10; 10') for a seat-belt tensioner in a vehicle, comprising
a driving element (14) adapted for being rotated in a driving direction (D) and in a releasing direction (R) and
a driven element (18) connectable with a seat-belt spool, the driving element (14) and the driven element (18) having a common rotation axis (A),
a pawl (22) being pivotally held at a pivot pin (24) arranged on the driving element (14) and forming a pivot axis,
the pawl (22) having a bearing lug (56) with a non-circular inner circumference, the bearing lug (56) being positioned around the pivot pin (24) so that the pawl (22) can be shifted for a limited distance with respect to the pivot pin (24),
the pawl (22) being adapted to assume a neutral position in which the pawl (22) is not in engagement with the driven element (18) and from which it can be pivoted radially inwards by turning the driving element (14) in driving direction (D), an engaged position in which the pawl (22) engages the driven element (18) and couples the driving element (14) with the driven element (18), and a decoupled position in which the pawl (22) is not in engagement with the driven element (18) and cannot be engaged with the driven element (18) by turning the driving element (14) in driving direction (D).

2. Clutch according to claim 1, **characterized in that** in the engaged position the inner circumference of the bearing lug (56) is distanced from the pivot pin (24) along the radial direction (r) in direction towards the rotation axis (A).

3. Clutch according to any of the preceding claims, **characterized in that** the inner circumference of the bearing lug (56) has an oval shape.

4. Clutch according to any of the preceding claims, **characterized in that** a pawl positioning element (62; 62') is provided that keeps the pivot pin (24) in a predetermined region of the bearing lug (56) during regular engagement and disengagement processes.

5. Clutch according to claim 4, **characterized in that** a clutch disk ring (32) is provided that has a guiding geometry that interacts with a guiding geometry provided on the pawl (22) to guide the pawl (22) into the engaged and the disengaged position, and that the pawl positioning element (62) is arranged on the clutch disk ring (32).

6. Clutch according to claim 4, **characterized in that** the pawl positioning element (62') is arranged on the driving element (14).

7. Clutch according to claim 6, **characterized in that** the pawl positioning element (62') is a spring element, the spring element in particular acting on the pawl (22) essentially in a direction towards the rotation axis (A).

8. Clutch according to any of the preceding claims, **characterized in that** the pawl (22) has at least one tooth (28) that is engaged with a toothing of the driven element (18) in the engaged position and the pawl (22) has a contact portion (60) that is arranged distanced from the at least on tooth (28) and that is in contact with one of the teeth (30) of the driven element (18) in the engaged position.

9. Clutch according to claim 8, **characterized in that** the contact portion (60) is located between the bearing lug (56) and a center of mass (M) of the pawl (22).

10. Method for transferring a clutch according to any of the preceding claims from the engaged position into the decoupled position, with the following steps:
- a pyrotechnic drive coupled with the driven element (18) is activated,
- an impulse acting in a radially outwards direction is introduced into the pawl (22) by the driven element (18),
- the bearing lug (56) of the pawl (22) is shifted in radially outwards direction while the pawl (22) stays in engagement with the driven element (18), and
- the pawl (22) is pivoted outwards into the decoupled position when the driven element (18) is rotated in driving direction (D) by the pyrotechnic drive.

11. Method according to claim 10, **characterized in that** the pawl (22) rotates about its center of mass (M) while shifting on the pivot pin (24) so that teeth (28) in the region of a free end of the pawl (22) are moved further radially inwards into a toothing of the driven element (18).

## Patentansprüche

1. Kupplung (10; 10') für einen Gurtstraffer in einem Fahrzeug, mit
einem Antriebselement (14), das in eine Antriebsrichtung (D) und eine Ausrückrichtung (R) drehbar ist und
einem Abtriebselement (18), das mit einer Gurtspule verbunden werden kann, wobei das Antriebselement (14) und das Abtriebselement (18) eine gemeinsame Drehachse (A) aufweisen,
einer Kupplungsklinke (22), die schwenkbar an einem am Antriebselement (14) angeordneten Drehzapfen (24) gelagert ist und eine Schwenkachse bildet,
wobei die Kupplungsklinke (22) ein Lagerauge (56) mit einem unrunden Innenumfang aufweist, wobei das Lagerauge (56) so um den Drehzapfen (24) angeordnet ist, dass die Kupplungsklinke (22) relativ zum Drehzapfen (24) begrenzt verschiebbar ist,
wobei die Kupplungsklinke (22) eine Ausgangsstellung einnehmen kann, in der die Kupplungsklinke (22) nicht mit dem Abtriebselement (18) in Eingriff steht und aus der sie durch das Drehen des Antriebselements (14) in Antriebsrichtung (D) radial nach innen geschwenkt werden kann, eine eingesteuerte Stellung, in der die Kupplungsklinke (22) in das Abtriebselement (18) eingreift und das Antriebselement (14) mit dem Abtriebselement (18) koppelt, und eine entkoppelte Stellung, in der die Kupplungsklinke (22) nicht mit dem Abtriebselement (18) in Eingriff steht und nicht mit dem Abtriebselement (18) durch Drehen des Antriebselements (14) in Antriebsrichtung (D) in Eingriff gebracht werden.

2. Kupplung nach Anspruch 1, **dadurch gekennzeichnet, dass** in der eingesteuerten Stellung der Innenumfang des Lagerauges (56) von dem Drehzapfen (24) entlang der Radialrichtung (r) in Richtung zur Drehachse (A) beabstandet ist.

3. Kupplung nach einem der vorhergehenden Ansprüche, **dadurch gekennzeichnet, dass** der Innenumfang des Lagerauges (56) eine ovale Form aufweist.

4. Kupplung nach einem der vorhergehenden Ansprüche, **dadurch gekennzeichnet, dass** ein Element zur Positionierung der Kupplungsklinke (62; 62') vorgesehen ist, das den Drehzapfen (24) während der regulären Einsteuer- und Aussteuervorgänge in einem vorgegebenen Bereich des Lagerauges (56) hält.

5. Kupplung nach Anspruch 4, **dadurch gekennzeichnet, dass** ein Kupplungsscheibenring (32) vorgesehen ist, der eine Einsteuergeometrie aufweist, die mit einer an der Kupplungsklinke (22) vorgesehenen Einsteuergeometrie zur Steuerung der Kupplungsklinke (22) in die eingesteuerte und ausgesteuerte Stellung zusammenwirkt, und dass das Element zur Positionierung der Kupplungsklinke (62) an dem Kupplungsscheibenring (32) angeordnet ist.

6. Kupplung nach Anspruch 4, **dadurch gekennzeichnet, dass** das Element zur Positionierung der Kupplungsklinke (62') am Antriebselement (14) angeordnet ist.

7. Kupplung nach Anspruch 6, **dadurch gekennzeichnet, dass** das Element zur Positionierung der Kupplungsklinke (62') ein Federelement ist, wobei das Federelement insbesondere auf die Kupplungsklinke (22) im Wesentlichen in einer Richtung zur Drehachse (A) wirkt.

8. Kupplung nach einem der vorhergehenden Ansprüche, **dadurch gekennzeichnet, dass** die Kupplungsklinke (22) mindestens einen Zahn (28) aufweist, der in Eingriff mit einer Verzahnung des Abtriebselements (18) in der eingesteuerten Stellung steht und dass die Kupplungsklinke (22) einen Kontaktabschnitt (60) aufweist, der beabstandet von dem mindestens einen Zahn (28) angeordnet ist und der in Kontakt mit einem der Zähne (30) des Abtriebselements (18) in der eingesteuerten Stellung steht.

9. Kupplung nach Anspruch 8, **dadurch gekennzeichnet, dass** sich der Kontaktabschnitt (60) zwischen dem Lagerauge (56) und einem Schwerpunkt (M) der Kupplungsklinke (22) befindet.

10. Verfahren zur Übertragung einer Kupplung nach einem der vorhergehenden Ansprüche von der eingesteuerten Stellung in die entkoppelte Stellung mit folgenden Schritten:
- ein pyrotechnischer Antrieb gekoppelt mit dem Abtriebselement (18) wird aktiviert,
- ein Impuls, der in eine radial nach außen gehende Richtung wirkt, wird durch das Abtriebselement (18) in die Kupplungsklinke (22) eingebracht,
- das Lagerauge (56) der Kupplungsklinke (22) wird in radial nach außen gehender Richtung verschoben, während die Kupplungsklinke (22) in Eingriff mit dem Abtriebselement (18) bleibt, und
- die Kupplungsklinke (22) wird nach außen in die entkoppelte Stellung geschwenkt, wenn das Abtriebselement (18) durch den pyrotechnischen Antrieb in Antriebsrichtung (D) gedreht wird.

11. Verfahren nach Anspruch 10, **dadurch gekennzeichnet, dass** sich die Kupplungsklinke (22) um ihren Schwerpunkt (M) dreht, während sie sich an dem Drehzapfen (24) verschiebt, so dass die Zähne (28) in dem Bereich eines freien Endes der Kupplungsklinke (22) weiter radial nach innen in eine Verzahnung des Abtriebselements (18) bewegt werden.

## Revendications

1. Un embrayage (10; 10 ') pour tendeur de ceinture de sécurité dans un véhicule, comprenant
un élément d'entraînement (14) adapté pour être entraîné en rotation dans un sens d'entraînement (D) et dans un sens de libération (R) et
un élément entraîné (18) pouvant être connecté à une bobine de ceinture de sécurité, l'élément d'entraînement (14) et l'élément entraîné (18) ayant un axe de rotation commun (A),
un cliquet (22) étant maintenu pivotant au niveau d'un axe de pivotement (24) agencé sur l'élément d'entraînement (14) et formant un axe de pivotement,
le cliquet (22) ayant une patte d'appui (56) avec une circonférence interne non circulaire, la patte d'appui (56) étant positionnée autour de l'axe de pivotement (24) de sorte que le cliquet (22) puisse être déplacé sur une distance limitée par rapport au pivot (24),
le cliquet (22) étant apte à adopter une position neutre dans laquelle le cliquet (22) n'est pas en prise avec l'élément entraîné (18) et à partir duquel il peut être pivoté radialement vers l'intérieur en faisant tourner l'élément d'entraînement (14) lors de l'entraînement direction (D), une position enclenchée dans laquelle le cliquet (22) engage l'élément entraîné (18) et accouple l'élément d'entraînement (14) à l'élément entraîné (18), et une position découplée dans laquelle le cliquet (22) n'est pas en prise avec l'élément entraîné (18) et ne peut pas être engagé avec l'élément entraîné (18) en tournant l'élément d'entraînement (14) dans le sens d'entraînement (D).

2. Embrayage selon la revendication 1, **caractérisé en ce que** dans la position engagée la circonférence interne de la patte d'appui (56) est éloignée de l'axe de pivotement (24) dans la direction radiale (r) dans la direction de l'axe de rotation (A).

3. Embrayage selon l'une quelconque des revendications précédentes, **caractérisé en ce que** la circonférence interne de la patte d'appui (56) a une forme ovale.

4. Embrayage selon l'une quelconque des revendications précédentes, **caractérisé en ce qu'**il est prévu un élément de positionnement du cliquet (62; 62 ') qui maintient l'axe de pivotement (24) dans une région prédéterminée de la patte d'appui (56) lors de processus réguliers d'engagement et de désengagement.

5. Embrayage selon la revendication 4, **caractérisé en ce qu'**il est prévu une bague de disque d'embrayage (32) ayant une géométrie de guidage qui interagit avec une géométrie de guidage prévue sur le cliquet (22) pour guider le cliquet (22) dans les position dégagée, et que l'élément de positionnement de cliquet (62) est agencé sur la bague de disque d'embrayage (32).

6. Embrayage selon la revendication 4, **caractérisé en ce que** l'élément de positionnement de cliquet (62 ') est agencé sur l'élément d'entraînement (14).

7. Embrayage selon la revendication 6, **caractérisé en ce que** l'élément de positionnement de cliquet (62 ') est un élément à ressort, l'élément à ressort agissant en particulier sur le cliquet (22) essentiellement dans une direction allant vers l'axe de rotation (A).

8. Embrayage selon l'une des revendications précédentes, **caractérisé en ce que** le cliquet (22) comporte au moins une dent (28) en prise avec une denture de l'élément entraîné (18) en position enclenchée et le cliquet (22) comporte une partie de contact (60) qui est disposée à distance de la dent (28) au moins et qui est en contact avec l'une des dents (30) de l'élément entraîné (18) en position engagée.

9. Embrayage selon la revendication 8, **caractérisé en ce que** la partie de contact (60) est située entre la patte d'appui (56) et un centre de masse (M) du cliquet (22).

10. Procédé de transfert d'un embrayage selon l'une quelconque des revendications précédentes de la position engagée vers la position découplée, avec les étapes suivantes:
un entraînement pyrotechnique couplé à l'élément entraîné (18) est activé,
une impulsion agissant dans une direction radialement extérieure est introduite dans le cliquet (22) par l'élément entraîné (18),
la patte d'appui (56) du cliquet (22) est décalée radialement vers l'extérieur tandis que le cliquet (22) reste en prise avec l'élément entraîné (18), et
le cliquet (22) pivote vers l'extérieur dans la position découplée lorsque l'élément entraîné (18) est entraîné en rotation dans le sens de l'entraînement (D) par entraînement pyrotechnique.

11. Procédé selon la revendication 10, **caractérisé en ce que** le cliquet (22) tourne autour de son centre de masse (M) en se déplaçant sur le pivot (24) de sorte que les dents (28) dans la région d'une extrémité libre du cliquet (22) sont déplacés radialement vers l'intérieur dans une denture de l'élément entraîné (18).
